# EUROPEAN PATENT APPLICATION

(11) **EP 3 823 131 A1**
(43) Date of publication of application: **19.05.2021**
(21) Application number: 19208465.5
(22) Date of filing: 12.11.2019
(51) Int. Cl.: H02J 7/02, H02M 1/36

(54) **CONTROLLER FOR CHARGER DEVICE, CHARGER DEVICE AND METHOD**

(71) Applicant: Infineon Technologies Austria AG, 9500 Villach (AT)
(72) Inventor: DEBOY, Gerald, 9061 Klagenfurt (AT); KATZMAIER, Ernst, 9500 VIllach (AT); KIRCHNER, Uwe, 9411 St. Michael i. Lav. (AT)
(74) Representative: Sticht, Andreas

(57) **Abstract**

Controllers for charger devices, charger devices and corresponding methods are provided. Upon detection of an event, an intermediate circuit is pre-charged by a battery by controlling a DC/DC converter (13). After the pre-charging, the charger device is operated to charge the battery (14).

## Description

### TECHNICAL FIELD

The present invention relates to controllers for charger devices, corresponding charger devices and methods for operating charger devices.

### BACKGROUND

Charger devices are used to charge one or more batteries based on an input electrical power usually received as mains power from a power grid. One type of charger devices are onboard charger used in vehicles, in particular electric vehicles or hybrid vehicles, to charge a high voltage battery of the vehicle.

Such charger devices may comprise an AC/DC converter converting an alternating current (AC) received from the power grid to an intermediate direct current (DC) voltage followed by a DC/DC converter converting the intermediate DC voltage to an output voltage. Further components which may be provided include for example filters.

In such arrangements, the AC/DC converter in many applications comprises a rectifier and a power factor correction (PFC) stage. Power factor correction stages serve to bring the power factor, which is the ratio of real power absorbed by the load to the apparent power flowing in the circuit, near 1. Such power factor correction is sometimes required by law, as it increases the efficiency of the power grid supplying the input electrical power.

Between the AC/DC converter and the DC/DC converter, in many configurations a bulk capacitor is provided. At startup of the charger device, this bulk capacitor needs to be charged.

Without any additional measures, charging this bulk capacitor may lead to a high inrush current at startup, which may damage components or may require large components configured to withstand high currents. This high inrush current may also trip electrical fuses within an AC mains supply.

In conventional devices, additional circuitry is provided to control the inrush current. Such conventional solutions, for example use a higher resistive path at startup for charging, thus limiting the inrush current. The higher resistive path is bridged after the bulk capacitor has been charged. Other solutions include the use of thyristor devices. Thyristors have a higher forward voltage drop in the on-state in comparison to a diode and lead hence to increased energy losses. Therefore, such conventional solutions require additional circuitry like a resistor and a switch or thyristors, and/or may lead to energy losses.

### SUMMARY

A method as defined in claim 1 and a controller as defined in claim 8 are provided. The dependent claims define further embodiments as well as a charger device comprising such a controller.

According to an embodiment, a method for operating a charger device, comprising an AC/DC converter device, a DC/DC converter device, an intermediate circuit between the AC/DC converter device and the DC/DC converter device and a battery coupled to the DC/DC converter device is provided, the method comprising:
detecting an event,
operating the DC/DC converter device to pre-charge the intermediate circuit from the battery, and
operating the AC/DC converter device and the DC/DC converter device to charge the battery after pre-charging the intermediate circuit.

Furthermore, a controller for a charger device is provided, wherein the controller is configured to:
receive an indication of a detected event,
operate a DC/DC converter device of the charger device to charge an intermediate circuit between the DC/DC converter device and an AC/DC converter device from a battery coupled to the DC/DC converter device in response to the detected event, and
after the pre-charging, operate the AC/DC converter device and the DC/DC converter device to charge the battery.

The above summary is merely intended to give a brief overview over some embodiments and is not to be construed as limiting in any way, as other embodiments may comprise other features than the ones explicitly explained above.

### BRIEF DESCRIPTION OF THE DRAWINGS

Fig. 1 is a block diagram of a system including a charger device according to some embodiments.
Fig. 2 is a flowchart illustrating a method according to some embodiments.
Fig. 3 is a block diagram of a system including a charger device according to further embodiments.
Figs. 4A to 4D illustrate implementation possibilities for an AC/DC converter in some embodiments.
Fig. 5 is a circuit diagram illustrating an implementation example for a bidirectional DC/DC converter in some embodiments.
Fig. 6 is a circuit diagram illustrating a part of a charger device according to an embodiment.
Fig. 7 is a block diagram of a bidirectional DC/DC converter device usable in some embodiments.
Fig. 8 is a block diagram illustrating part of a system according to some embodiments.
Fig. 9 illustrates an example application environment for charger devices according to some embodiments.

### DETAILED DESCRIPTION

In the following, various embodiments will be described in detail referring to the attached drawings. These embodiments are given by way of example only and are not to be construed as limiting in any way. For example, while some embodiments may be described comprising numerous features, for example components, in other embodiments some of these features may be omitted and/or may be replaced by alternative features. Apart from the features explicitly shown and described, other features, for example features used in conventional charger devices, like filters, which may not be explicitly shown in the embodiments discussed below, may be provided.

Connections or couplings as described herein refer to electrical connections or couplings unless specifically noted otherwise. Such connections or couplings may be modified, for example by adding additional elements, as long as the general purpose of the connection or coupling, for example to transmit a control signal, transmit a voltage, transmit a current, etc. is essentially maintained.

Features from different embodiments may be combined to form further embodiments. For example, modifications, variations and details described with respect to one of the embodiments may also be applied to other embodiments.

In order to avoid repetitions, in the figures like elements are designated with the same reference numerals and will not be described repeatedly.

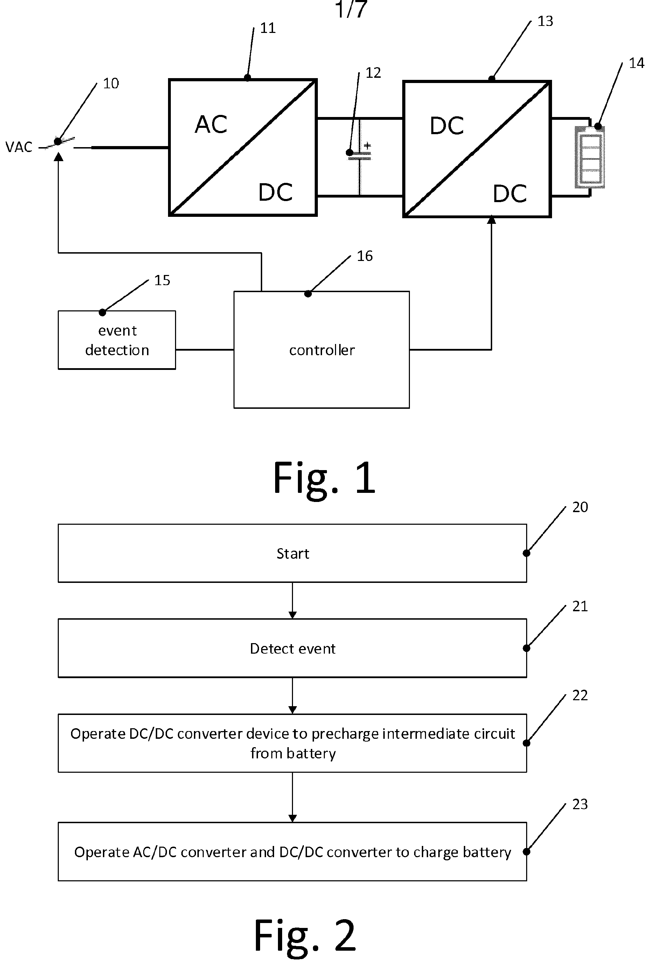

Turning now to the figures, Fig. 1 is a block diagram of a system including a charger device according to an embodiment.

The charger device of Fig. 1 receives an AC voltage VAC at a mains switch 10. Voltage VAC may be a mains voltage received from a power grid. In some cases voltage VAC may be a multi-phase voltage like a three-phase voltage. In such a case, switch 10 may comprise several sub-switches, for example one sub-switch for each phase. It should be noted that in other embodiments mains switch 10 may be omitted. In such cases, when present, a mains voltage may be directly connected to the charger device.

When mains switch 10 is closed, voltage VAC is supplied to an AC/DC (alternating current/direct current) converter device 11 which outputs an intermediate DC voltage to an intermediate circuit comprising at least a capacitor 12. Other circuit elements may additionally be provided in the intermediate circuit. AC/DC converter device 11 may be a unidirectional device only capable of converting the voltage VAC to the intermediated DC voltage, or may be a bidirectional device which is also capable of receiving a DC voltage from the side of capacitor 12 and outputting an AC voltage in a so-called island configuration where other devices receive an AC voltage from the charger device or outputting a current into the AC mains grid for Vehicle-to-grid applications. Examples will be described further below.

In the following, reference will be made only to capacitor 12, with the understanding that further circuit elements may be provided in an intermediate circuit.

Capacitor 12 is coupled a first side of a DC/DC converter device 13. A second side of DC/DC converter device 13 is coupled a battery 14. DC/DC converter device 13 in the embodiment of Fig. 1 is a bidirectional DC/DC converter device. In some embodiments, for this a bidirectional DC/DC converter circuit may be provided. In other embodiments, DC/DC converter device 13 may comprise two unidirectional DC/DC converter circuits. Examples for both possibilities will be discussed further below.

In case of a multi-phase input, AC/DC converter device 11 and DC/DC converter device 13 may comprise separate sub-devices for each phase, as will also be explained further below.

In normal charging operation of the charger device of Fig. 1, mains switch 10 is closed, such that voltage VAC is supplied to AC/DC converter 11. AC/DC converter 11 converts voltage VAC to an intermediate voltage at capacitor 12, which in turn is converted by DC/DC converter 13 to a voltage for charging battery 14. In some embodiments, battery 14 may be a high voltage (HV) battery of a vehicle, and an output voltage of DC/DC converter 13 may be of the order of some hundred volts, for example about 400 V, but not limited thereto.

Furthermore, in some cases where also AC/DC converter device 11 is bidirectional, the charger device may be used to output an AC current or an AC voltage from battery 14 via devices 13, 11, for example in so-called vehicle to x(V2x) applications where a battery in a vehicle may be used to supply power to other entities.

These two kinds of operation correspond to conventional operations and will not be described here in detail.

As explained initially, when a charging operation starts, capacitor 12 needs to be charged, which may lead to large inrush currents. In embodiments, to overcome this problem, an event detection circuit 15 and a controller 16 are provided. In a simple example, event detection circuit 15 detects when charging is to be started. For example, event detection circuit 15 may detect that the charger device is coupled to a mains supply and therefore receives the voltage VAC by monitoring the voltage at switch 10 (or an input of charger device 10 in case no mains switch is provided). In other embodiments, for example in a socket of an electrical vehicle, a detector may be provided which detects the mechanical action of plugging a plug into the socket. This indicates that the battery now is to be charged. At this point, mains switch 10, if provided, is open.

Controller 16 then controls DC/DC converter device 13 to provide power from battery 14 to capacitor 12, thus charging capacitor 12. This charging of capacitor 12 is also referred to as pre-charging herein, as it is a charging before the normal operation of charging battery 14 based on voltage VAC starts. After this pre-charging, controller 16 controls switch 10 to be closed and DC/DC converter 13 to operate in the direction from capacitor 12 to battery 14, such that the above-described normal charging operation starts.

As capacitor 12 has been pre-charged by battery 14 before switch 10 is closed, in some embodiments, problems related to an inrush current via AC/DC converter 11 do not occur or are at least mitigated.

It should be noted that in recent developments, bidirectional AC/DC converter devices and DC/DC converter devices are used in charger devices any way to provide the above-mentioned vehicle to x functionality, such that in such cases no additional hardware is required. It should also be noted that controller 16 may also be used to control AC/DC converter device 11 and DC/DC converter device 13 during the normal charging operation (after the above charging phase) or also in the above-mentioned vehicle to x applications, such that also no additional controller is required. Controller 16 may for example be a microcontroller programmed accordingly, an application-specific circuit (ASIC), a general purpose processor programmed accordingly, or any other device capable of controlling converter devices 11, 13, accordingly.

It should be noted that starting of a charging by connecting the charger device to a mains voltage is not the only possible event that may be detected by event detection circuit 15. In other embodiments, for example a condition which requires a restart of the charging device may be detected, like a line cycle dropout where VAC drops to zero for one cycle or brown-out conditions where the voltage VAC drops to low values for shorter or longer times may be detected. Also in such conditions, switch 10 may be opened, and capacitor 12 may be charged by battery 14, before normal charging operation is resumed. In this way, also issues with instable grids and potential loss of power in the AC mains during a charging operation may be handled in some embodiments. In case no mains switch 10 is provided, event detection circuit 15 may monitor the voltage VAC and a voltage at capacitor 12 and detect an event when the voltage at capacitor 12 is lower than the voltage VAC. Upon such an event, controller 16 then controls DC/DC converter device 13 to charge capacitor 12 from battery 14 in case the voltage at the intermediate circuit is lower than the voltage VAC at the input of AC/DC converter device 11. In other words, in such embodiments the voltage at capacitor 12 is maintained at a level equal to or higher than a voltage at the input of AC/DC converter device 11.

In other embodiments, event detection circuit may monitor only the voltage at capacitor 12 and detect when this voltage drops or falls below a predefined threshold. Also such events may trigger a precharging.

In other embodiments, events detected by event detection circuit may include a turning off of a system including the charger device. For example, when the system is a car, the event may be turning off the ignition (in conventional cars using the car key), and in this case capacitor 12 may be pre-charged to be ready for charging of the car.

It should be noted that in some applications, mechanisms exist to prevent a "deep discharging" of battery 14. For example, such mechanism exists in many conventional automotive applications. In some embodiments, this ensures that there is enough charge in battery 14 left to perform the pre-charging of capacitor 12.

Fig. 2 is a flowchart illustrating a method according to an embodiment. This method may be implemented in the device of Fig. 1 corresponding to the operation described above, but also may be implemented using other charger devices, for example as will be explained further below. For ease of explanation and to avoid repetitions, the method of Fig. 2 will be described referring to the charger device of Fig. 1 and the explanations given above with the understanding that the method of Fig. 2 may also be applied to other charger devices.

At 20 in Fig. 2, the method starts. In case a mains switch is provided, the method starts with a mains switch (for example switch 10 of Fig. 1) being open. As mentioned above, in case of brown out or AC cycle drop out, this may trigger to open the mains switch.

At 21, an event is detected which e.g. indicates the beginning of a charging operation, as explained above for example voltage VAC rising or plugging in of a plug into a socket. As also mentioned with respect to Fig. 1, for other events like line cycle dropout or brownouts, the mains switch may be opened in response to detecting a corresponding event in some embodiments. Other events explained above with respect to Fig. 1 may also be used in the method of Fig. 2.

At 22, the method comprises operating a DC/DC converter device to pre-charge an intermediate circuit (e.g. capacitor 12) between an AC/DC converter device (for example AC/DC converter device 11) by a battery (for example battery 14). During this pre-charging, the AC/DC converter device may be deactivated.

At 23, after the intermediate circuit is charged, for example after a predefined time period, the method comprises operating the AC/DC converter device and the DC/DC converter to charge the battery. If the charger device comprises a mains switch, at 23 the method may additionally comprise closing the mains switch.

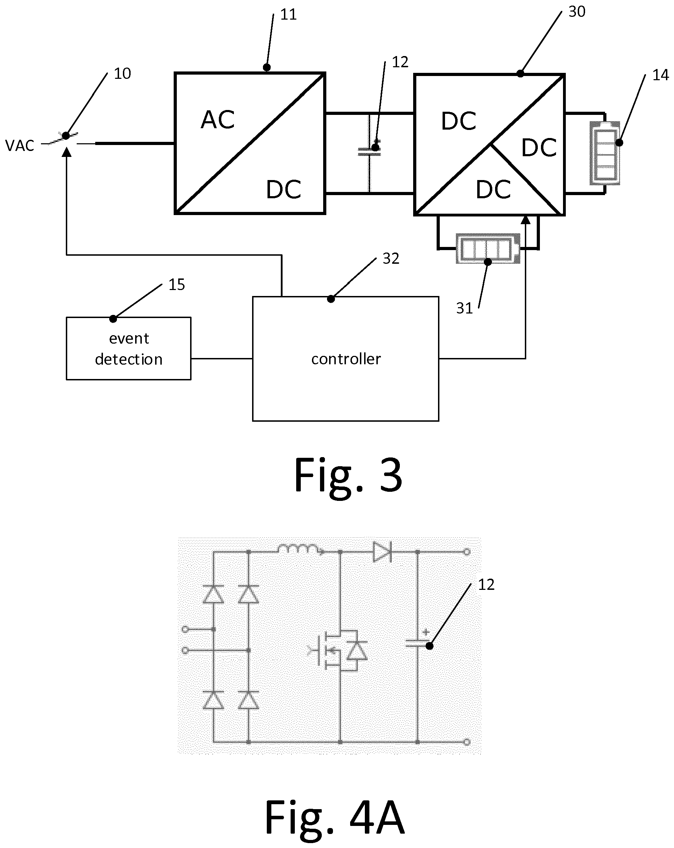

Details and variations of the charger devices and methods discussed with references to Figs. 1 and 2 will now be explained referring to Figs. 3 to 8.

In some applications, more than one battery is used. For example, vehicles often comprise a high voltage battery for example for supplying an electric motor, with voltages which may be of the order of 400 V, and a low voltage battery. Such a low voltage battery may be charged by a high voltage battery using an additional DC/DC converter. This additional converter may be combined with the charger device. A corresponding embodiment is shown in Fig. 3. For ease of explanation, only the differences to the embodiment of Fig. 1 will be explained.

Bidirectional DC/DC converter device 13 of Fig. 1 has been replaced by a "tridirectional" DC/DC converter device 30 which may for example be composed of several bidirectional or unidirectional DC/DC converter circuits. DC/DC converter device 30 in normal charging operation is operable to charge battery 14, which in this case is a high voltage battery, based on the mains power VAC. Furthermore, DC/DC converter device 30 may be operable to charge a further battery 31, which may be a low voltage battery, by high voltage battery 14. In other embodiments, DC/DC converter device 30 may also be operable to charge further battery 31 directly from voltage VAC.

Furthermore, compared to the embodiment of Fig. 1, controller 16 is replaced by controller 32. Controller 32 essentially may operate as described for controller 16. However, in addition to the capabilities of controller 16, for the pre-charging of capacitor 12 (corresponding for example to the charging at 22 of Fig. 2) controller 32 may select to charge capacitor 12 by battery 14 or by further battery 31, by controlling DC/DC converter device 30 accordingly. For example, controller 32 may decide based on a "charging/discharging history" or based on a charging state of battery 14 and further battery 31 which may be measured according to any conventional method for measuring the charging state of a battery. For example, if battery 14 is almost discharged, further battery 31 may be used for charging capacitor 12 prior to normal charging operation based on voltage VAC, and vice versa.

Apart from these differences, the embodiment of Fig. 3 may operate as described for the embodiment of Fig. 1 or also for the method of Fig. 2, including the reaction to various types of events.

Next, various implementation possibilities for AC/DC converter devices (for example 11 in Figs. 1 and 3) and DC/DC converter devices (for example 13 in Fig. 1 or 30 in Fig. 3) will be discussed.

Figs. 4A to 4D illustrate various implementation possibilities for AC/DC converter circuits usable in charger devices according to embodiments, for example in AC/DC converter device 11 of Figs. 2 and 3. Each of these circuits include the already discussed capacitor 12.

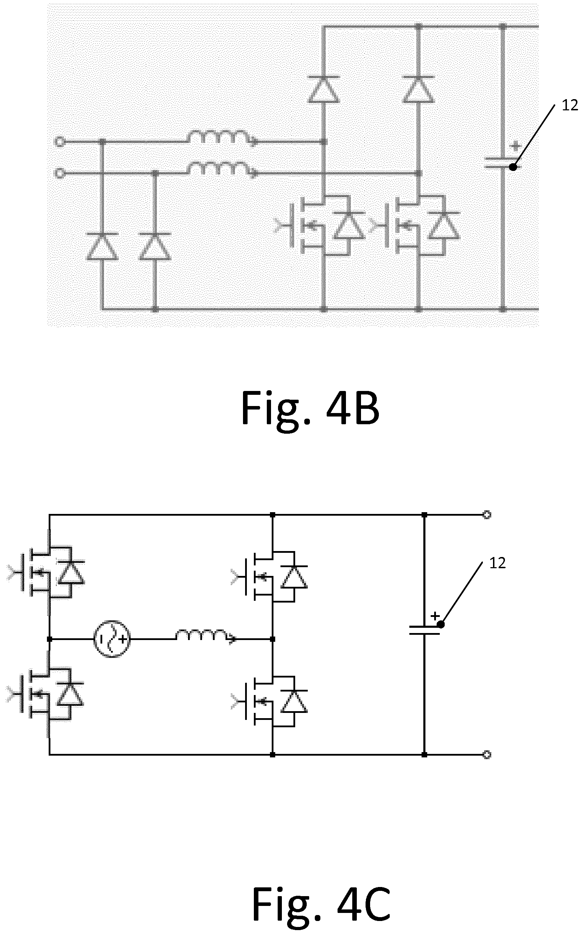

Figs. 4A and 4B show unidirectional AC/DC converters providing a power factor correction and rectification. The converter of Fig. 4A includes a boost type power factor correction circuit, and the converter of Fig. 4B includes a semi-bridgeless power factor correction circuit.

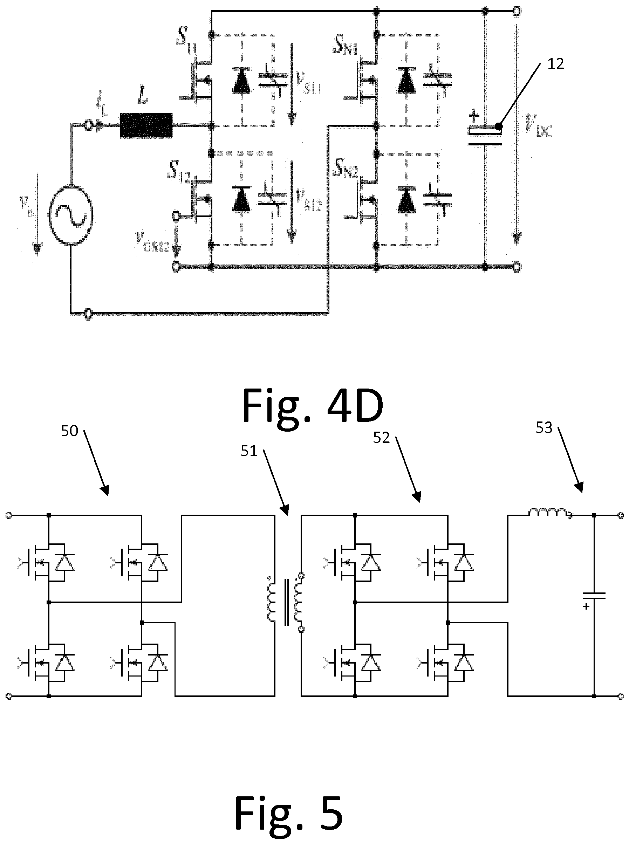

The converters of Figs. 4C and 4D show bidirectional power factor corrections circuits. Fig. 4C shows a totem pole type circuit with e.g. wide bandgap devices used in the high frequency leg and silicon devices being used in the low frequency leg, and Fig. 4D shows a totem pole type circuit with silicon devices in all switch positions employing triangular current mode (TCM) regulation. It should be noted that these are only some examples, and other conventional power factor correction circuits or other AC/DC converter circuits like Vienna rectifiers or matrix converters may also be used.

Fig. 5 illustrates an example for a bidirectional DC/DC converter circuit usable for example to implement bidirectional DC/DC converter device 13 of Fig. 1. The DC/DC converter circuit of Fig. 1 comprises a first side stage 50, a transformer 51, a second side stage 52 and an output stage 53 to which for example battery 14 is coupled. First side stage 50 and second side stage 52 each comprises a full bridge of transistors which may be controlled for example by controller 16 to provide the DC/DC conversion in the required direction. For example, for a conversion from first side 50 to second side 52, first side stage 50 is actively operated while second side stage 52 performs synchronous rectification (turning on the channel, when the body diode of the switch is forward biased), whereas for a DC/DC conversion from the second side to the first side second side stage 52 is actively operated and first side stage 50 performs synchronous operation. The topology shown in Fig. 5 is also referred to as a bidirectional phase shifted full bridge DC/DC power converter. Other bidirectional DC/DC converters like bidirectional dual active bridge converters or bidirectional CLLC converters may also be used, such that the choice of a bidirectional converter circuit is not particularly limited.

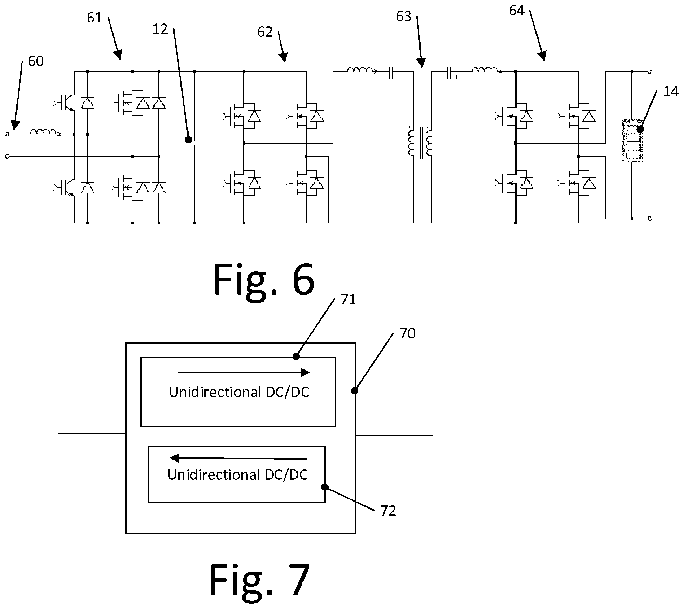

Fig. 6 illustrates an example circuit combining an AC/DC converter including power factor correction together with a bidirectional DC/DC converter. The AC/DC converter circuit comprises a boost type power factor correction according to Fig. 4C, and the DC/DC converter comprises a CLLC converter. An AC voltage (VAC of Fig. 1, for example) is received at 60 by a rectifier/power factor correction circuit 61. The DC/DC converter circuit comprises a primary side stage 62, a transformer 64 and a secondary side stage 64 which is coupled to battery 14. Capacitor 12 is provided between circuit 61 and stage 62. A controller like controller 16 of Fig. 1 may control the transistors of circuit 61 and stages 62 and 64 to implement the operation described herein.

For the DC/DC converter device 30 of Fig. 3, for example two bidirectional converter circuits as shown in Fig 5 may be used. Both DC/DC converter couple each the battery to the intermediate circuit 12. Alternatively magnetic structures may be used having one set of primary windings and two sets of secondary windings producing two different output voltages.

As already mentioned, besides using a bidirectional DC/DC converter circuit as shown in Fig. 5, also two unidirectional DC/DC converter circuits may be used to form a bidirectional DC/DC converter device like bidirectional converter device 13 of Fig. 1. An example is shown in Fig. 7.

Fig. 7 shows a bidirectional DC/DC converter device comprising a first unidirectional DC/DC converter circuit 71 and a second unidirectional DC/DC converter circuit 72. Circuits 71, 72 are operable in opposite directions. For example, circuit 71 may be used during the normal charging operation while circuit 72 may be used for the pre-charging of capacitor 12 discussed above. It should be noted that for pre-charging capacitor 12 less power is required in many embodiments than for the normal charging operation, and in this case for example circuit 72 may be designed for less power transfer than converter 71.

For providing a converter device like converter device 30 of Fig. 3, a corresponding higher number of unidirectional DC/DC converter circuits may also be used in some implementations.

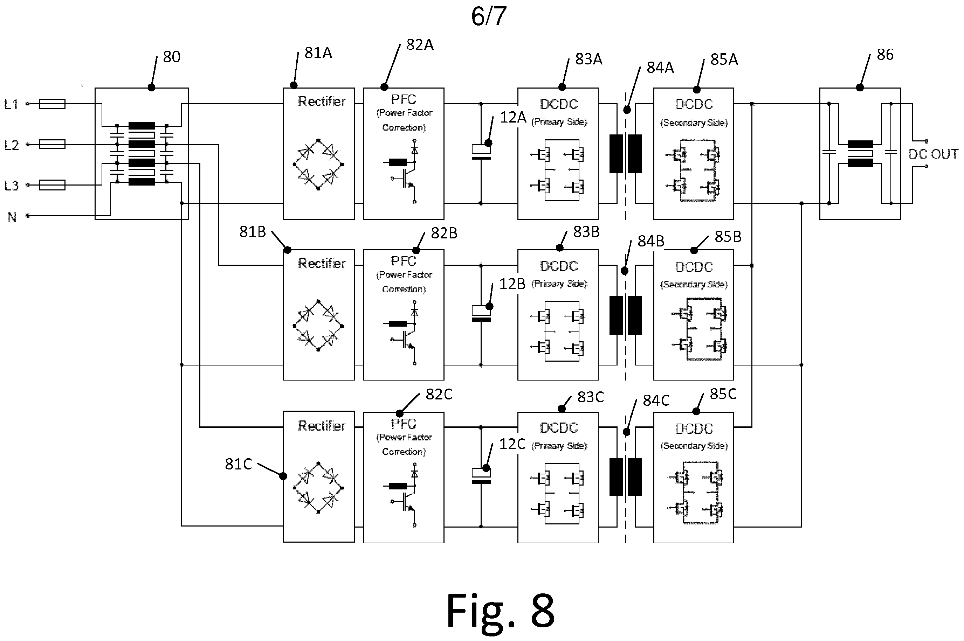

As already mentioned with respect to Fig. 1, in some cases the voltage VAC may be a multi-phase voltage like a three-phase voltage, and AC/DC converters and DC/DC converters may be provided separately for each phase. An example for a three-phase voltage is shown in Fig. 8.

In the example of Fig. 8, three phases L1, L2 and L3 are received. N designates a neutral conductor. The voltage is supplied to an input stage 80, which may also comprise switches to separate the voltage from the rest of the circuit, corresponding to the function of mains switch 10 of Fig. 1. After input stage 80, for each phase elements 81 to 85 are provided, labeled 81A to 85A for phase L1, 81B to 85B for phase L2 and 81C to 85C for phase L3. These elements in the embodiment of Fig. 8 are the same for each phase and therefore only elements 81A to 85A will be described in some detail, with the understanding that the description also applies to elements 81B to 85B and to elements 81C to 85C.

Phase L1 is provided to a rectifier 81A and power factor correction circuit 82A, which are an example for an AC/DC converter. It should be noted that rectifier 81A and power factor correction circuit 82A may be implemented in a common circuit, as shown in Figs. 4A to 4D as examples. Capacitor 12A corresponds to capacitor 12 explained with reference to Fig. 1. A bidirectional DC/DC converter has a primary side stage 83A, a transformer 84A and a secondary side stage 85A and may also be implemented in any manner as explained above. The secondary side stages 85A, 85B and 85C are combined at an output stage 86, to which for example battery 14 may be coupled. Primary side stages 83A to 83C and secondary side stages 85A to 85C may be controlled by a controller like controller 16 or controller 32 as explained above for pre-charging capacitors 12A to 12C.

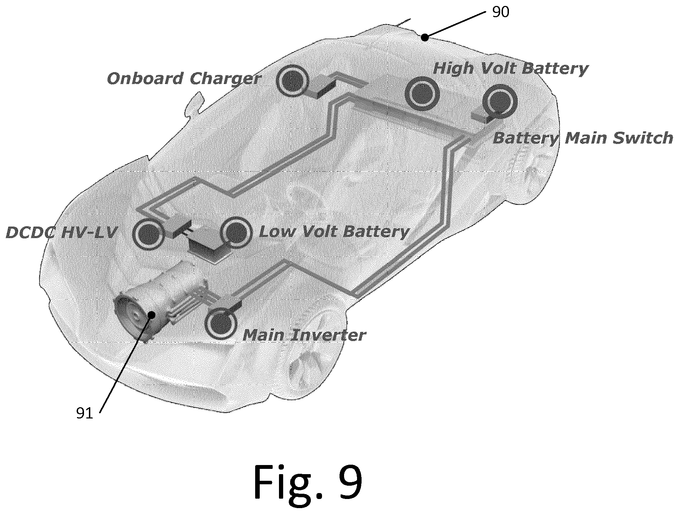

As already mentioned, charger devices and methods discussed above may be used in a vehicle, in particular an electric or hybrid vehicle. An example for such a vehicle 90 is shown in Fig. 9. Vehicle 90 has an onboard charger which may be implemented corresponding to the charger devices discussed above to charge a high voltage battery. A battery mains switch may be used to decouple high voltage battery from a high voltage network within vehicle 90. A voltage from high voltage battery is provided to a main inverter driving or receiving power from an electric motor/generator 91. Furthermore, voltage from high voltage battery is provided to a DC/DC high voltage/low voltage converter to supply a low voltage battery. As explained with reference to Fig. 3, the DC/DC high voltage/low voltage converter may be integrated in the onboard charger, such that both the high voltage battery and the low voltage battery may be used to pre-charge an intermediate circuit of the onboard charger.

Some embodiments are defined by the following examples:
Example 1. A method for operating a charger device comprising an AC/DC converter device, a DC/DC converter device, an intermediate circuit between the AC/DC converter device and the DC/DC converter device and a battery coupled to the DC/DC converter device, the method comprising: detecting an event,
   operating the DC/DC converter device to pre-charge the intermediate circuit from the battery in response to detecting the event, and
   operating the AC/DC converter device and the DC/DC converter device to charge the battery after pre-charging the intermediate circuit.
Example 2. The method of example 1, further comprising closing a mains switch between the AC/DC converter device and a mains supply after pre-charging the intermediate circuit.
Example 3. The method of example 2, wherein detecting the event comprises detecting a drop of a mains voltage coupled to the mains switch, and wherein the method further comprises opening the mains switch in response to detecting the event.
Example 4. The method of any one of examples 1-3, wherein detecting the event comprises detecting a mains voltage being coupled to the charger device.
Example 5. The method of any one of examples 1-4, wherein detecting the event comprises one or more of detecting a voltage drop at an input of the AC/DC converter, a turning off of a system comprising the charger device, a turning on of a system comprising the charger device, a drop of a voltage at the intermediate circuit, a voltage at the intermediate circuit being below a predefined threshold or a voltage at the intermediate circuit being below an input voltage of the AC/DC converter device.
Example 6. The method of any one of examples 1-5, wherein pre-charging the intermediate circuit comprises pre-charging a capacitor of the intermediate circuit.
Example 7. The method of any one of examples 1-6, wherein operating the DC/DC converter device to pre-charge the intermediate circuit comprises selectively operating the DC/DC converter device to pre-charge the intermediate circuit from the battery or from a further battery.
Example 8. A controller for a charger device, wherein the controller is configured to:
   receive an indication of a detected event,
   operate a DC/DC converter device of the charger device to charge an intermediate circuit between the DC/DC converter device and an AC/DC converter device from a battery coupled to the DC/DC converter device in response to the detected event, and
   after the pre-charging, operate the AC/DC converter device and the DC/DC converter device to charge the battery.
Example 9. The controller of example 8, wherein the controller is configured to control execution of the method of any one of examples 1 to 7.
Example 10. The controller of example 8 or 9, further being configured to close a mains switch between the AC/DC converter device and a mains supply after pre-charging the intermediate circuit.
Example 11. The controller of example 10, wherein the detected event comprises d a drop of a mains voltage coupled to the mains switch, and wherein the controller is further configured to open the mains switch in response to detecting the event.
Example 12. The controller of any one of examples 8-11, wherein the detected event comprises a mains voltage being coupled to the charger device.
Example 13. The controller of any one of examples 8-12, wherein the detected event comprises one or more of a voltage drop at an input of the AC/DC converter, a turning off of a system comprising the charger device, a turning on of a system comprising the charger device, a drop of a voltage at the intermediate circuit, a voltage at the intermediate circuit being below a predefined threshold or a voltage at the intermediate circuit being below an input voltage of the AC/DC converter device.
Example 14. The controller of any one of examples 8-13, wherein the controller, in response to the event, is configured to operate the DC/DC converter device to selectively charge the intermediate circuit by the battery or by a further battery.
Example 15. A charger device, comprising:
   the controller of any one of examples 6-14,
   the AC/DC converter device,
   the intermediate circuit, and
   the DC/DC converter device.
Example 16. The charger device of example 15, wherein the DC/DC converter device comprises a bidirectional DC/DC converter circuit.
Example 17. The charger device of example 15, wherein the bidirectional DC/DC converter device comprises a first unidirectional DC/DC converter circuit for conversion in a first direction and a second DC/DC converter circuit for conversion in a second direction opposite the first direction.
Example 18. The charger device of any one of examples 15-17, wherein the DC/DC converter device is configured to perform a DC/DC conversion between the intermediate circuit, the battery and a further battery.
Example 19. The charger device of any one of examples 15-18, further comprising an event detection circuit configured to generate the indication of the detected event.
Example 20. The charger device of any one of examples 15-19, wherein the charger device is configured as an onboard charger device of a vehicle.
Example 21. The charger device of any one of examples 15-20, further comprising a mains switch.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A method for operating a charger device comprising an AC/DC converter device (11), a DC/DC converter device (13; 30; 70), an intermediate circuit between the AC/DC converter device (11) and the DC/DC converter device (13; 30; 70)and a battery (14) coupled to the DC/DC converter device (13; 30; 70), the method comprising:
detecting an event,
operating the DC/DC converter device (13; 30; 70) to pre-charge the intermediate circuit from the battery in response to detecting the event, and
operating the AC/DC converter device (11) and the DC/DC converter device (13; 30; 70)to charge the battery (14) after pre-charging the intermediate circuit.

2. The method of claim 1, further comprising closing a mains switch (10) between the AC/DC converter device (11) and a mains supply after pre-charging the intermediate circuit.

3. The method of claim 2, wherein detecting the event comprises detecting a drop of a mains voltage coupled to the mains switch (10), and wherein the method further comprises opening the mains switch (10) in response to detecting the event.

4. The method of any one of claims 1-3, wherein detecting the event comprises detecting a mains voltage (VAC) being coupled to the charger device.

5. The method of any one of claims 1-4, wherein detecting the event comprises one or more of detecting a voltage drop at an input of the AC/DC converter, a turning off of a system comprising the charger device, a turning on of a system comprising the charger device, a drop of a voltage at the intermediate circuit, a voltage at the intermediate circuit being below a predefined threshold or a voltage at the intermediate circuit being below an input voltage of the AC/DC converter device (11).

6. The method of any one of claims 1-5, wherein pre-charging the intermediate circuit comprises pre-charging a capacitor (12) of the intermediate circuit.

7. The method of any one of claims 1-6, wherein operating the DC/DC converter device (13; 30; 70) to pre-charge the intermediate circuit comprises selectively operating the DC/DC converter device (13; 30; 70) to pre-charge the intermediate circuit from the battery (14) or from a further battery (31).

8. A controller (16; 32) for a charger device, wherein the controller (16; 32) is configured to:
receive an indication of a detected event,
operate a DC/DC converter device (13; 30; 70) of the charger device to charge an intermediate circuit between the DC/DC converter device (13; 30; 70) and an AC/DC converter device (11) from a battery (14) coupled to the DC/DC converter device (13; 30; 70) in response to the detected event, and
after the pre-charging, operate the AC/DC converter device (11) and the DC/DC converter device (13; 30; 70) to charge the battery (14).

9. The controller (16;32) of claim 8, wherein the controller is configured to control execution of the method of any one of claims 1 to 7.

10. A charger device, comprising:
the controller of any one of claims 8 or 9,
the AC/DC converter device (11),
the intermediate circuit (12), and
the DC/DC converter device (13; 30; 70).

11. The charger device of claim 10, wherein the DC/DC converter device (13; 30; 70) comprises a bidirectional DC/DC converter circuit.

12. The charger device of claim 10, wherein the DC/DC converter device (13; 30; 70) comprises a first unidirectional DC/DC converter circuit (71) for conversion in a first direction and a second DC/DC converter circuit (72) for conversion in a second direction opposite the first direction.

13. The charger device of any one of claims 10-12, wherein the DC/DC converter device (13; 30; 70) is configured to perform a DC/DC conversion between the intermediate circuit, the battery (14) and a further battery (31).

14. The charger device of any one of claims 10-13, further comprising an event detection circuit (15) configured to generate the indication of the detected event.

15. The charger device of any one of claims 10-14, wherein the charger device is configured as an onboard charger device of a vehicle.
